# EUROPEAN PATENT APPLICATION

(11) **EP 4 834 597 A1**
(43) Date of publication of application: **04.11.2026**
(21) Application number: 24913102.0
(22) Date of filing: 27.12.2024
(51) Int. Cl.: B44C 1/175, B32B 27/30

(54) **MOISTURE-CURABLE RESIN SHEET, VEHICLE COMPONENT, VEHICLE, AND METHOD FOR MANUFACTURING VEHICLE AND VEHICLE COMPONENT**

(30) Priority: 28.12.2023 JP 2023223467
(71) Applicant: Sekisui Chemical Co., Ltd., Osaka-shi, Osaka 530-8565 (JP)
(72) Inventor: SHICHIRI, Tokushige, Mishima-gun, Osaka 618-0021 (JP); HIGUMA, Kazuki, Mishima-gun, Osaka 618-0021 (JP); NAKADATE, Junichi, Mishima-gun, Osaka 618-0021 (JP)
(74) Representative: Ter Meer und Partner mbB
(86) International application number: PCT/JP2024/046380
(87) International publication number: WO 2025/143216

(57) **Abstract**

The present invention relates to a moisture-curable resin sheet comprising: a transfer layer; and a resin layer comprising: (A) a (meth)acrylic resin having an isocyanate group.

## Description

### Technical Field

The present invention relates to a moisture-curable resin sheet, a vehicle component, a vehicle, and a method for manufacturing a vehicle and a vehicle component.

### Background Art

Conventionally, various products including furniture, steel plates, and vehicle bodies have been coated to impart functions such as aesthetic quality, durability, weather resistance, and scratch resistance. Coating is generally performed by spraying with air or electrostatic force. Replacement of spray coating with decorative technology involving use of resin films has been considered in recent years, against loss during coating, CO₂ emitted from factories, and large-scale capital investment.

Decorative technology is a technique that achieves high functionality and aesthetic quality by bonding a resin film (decorative film) having letters or pictures printed thereon with a white, black, or colored ink to an adherend for decoration. For example, a thermosetting resin sheet containing a thermosetting resin and a hardener is known to be used as a decorative film. The thermosetting resin sheet is bonded to an adherend and then heated to be hardened, so that the thermosetting resin sheet can coat the adherend with a high adhesive strength.

However, since the thermosetting resin sheet needs to be heated after bonding, it may not be applicable to some types of adherends. For this reason, use of a moisture-curable resin sheet as decorative film has been studied.

Generally, moisture-curable urethane resins are widely used as moisture-curable resins, as disclosed in, for example, Patent Literature 1. It is also known that an acrylic skeleton is introduced into a urethane prepolymer used for a moisture-curable urethane resin, as disclosed in, for example, Patent Literature 2.

### Citation List

### Patent Literature

PTL1: Japanese Patent No. 7363124
PTL 2: Japanese Patent No. 6584382

### Summary of Invention

### Technical Problem

Incidentally, a decorative resin sheet (resin layer) laminated on a transfer layer may be bonded to an adherend to achieve easy bonding to the adherend. On this occasion, when the resin sheet bonded to the adherend is cured after the transfer layer has been removed prior to curing, the exposed surface is prone to foreign-matter contamination and mechanical damage. Furthermore, if the transfer layer is peeled off in an uncured state, a stick-slip phenomenon may occur to cause streaks or the resin may adhere to the transfer layer, which results in a roughened surface. For these reasons, it is desirable for keeping the surface of the resin layer smooth to cure the resin in a state with the transfer layer attached.

However, according to investigation by the present inventors, it has been found that in the case where a decorative resin sheet made of urethane resin, which is a typical moisture-curable resin, having a transfer layer bonded thereto is cured, gases such as carbon dioxide generated during curing do not escape, so that bubbles remain in the coating film after curing to cause a roughened surface.

Also, the resin composition disclosed in Patent Literature 2 is a coating-type hot-melt resin composition, having difficulty in application to a decorative resin sheet.

Accordingly, an object of the present invention is to provide a moisture-curable resin sheet from which a coating with a good surface condition can be formed with less bubbles generated during curing.

### Solution to Problem

As a result of intensive research, the present inventors have found that the problem can be solved by a moisture-curable resin sheet comprising a transfer layer and a moisture-curable resin layer comprising a (meth)acrylic resin having an isocyanate group in the resin layer, and have completed the present invention as described below. In other words, the present invention provides the following items [1] to [12].
[1] A moisture-curable resin sheet comprising:
   a transfer layer; and
   a resin layer comprising: (A) a (meth)acrylic resin having an isocyanate group.
[2] The moisture-curable resin sheet according to the item [1], wherein the (meth)acrylic resin (A) has a weight average molecular weight of 10,000 or more and 500,000 or less.
[3] The moisture-curable resin sheet according to the item [1] or [2], further comprising: (B) a compound having two or more isocyanate groups other than the (meth)acrylic resin (A).
[4] The moisture-curable resin sheet according to the item [3], wherein the compound (B) has a molecular weight of 1000 or less.
[5] The moisture-curable resin sheet according to any one of the items [1] to [4], wherein the resin layer has a content of the (meth)acrylic resin (A) of 30 mass% or more.
[6] The moisture-curable resin sheet according to any one of the items [1] to [5], wherein the (meth)acrylic resin (A) has an isocyanate group in a side chain.
[7] The moisture-curable resin sheet according to any one of the items [1] to [6], wherein the (meth)acrylic resin (A) has an isocyanate group content of 0.5 mass% or more and 15 mass% or less.
[8] The moisture-curable resin sheet according to any one of the items [1] to [7], wherein the resin layer comprises a pigment.
[9] A vehicle component comprising a coating formed from the moisture-curable resin sheet according to any one of the items [1] to [8].
[10] A vehicle comprising a coating formed from the moisture-curable resin sheet according to any one of the items [1] to [8].
[11] A method for manufacturing a vehicle, comprising a process of coating with the moisture-curable resin sheet according to any one of the items [1] to [8].
[12] A method for manufacturing a vehicle component, comprising a process of coating with the moisture-curable resin sheet according to any one of the items [1] to [8].

### Advantageous Effect of Invention

The present invention provides a moisture-curable resin sheet from which a coating with a good surface condition can be formed with less bubbles generated during curing.

### Brief Description of Drawings

[Fig. 1] Fig. 1 is a schematic cross-sectional view showing an embodiment of a moisture-curable resin sheet.
[Fig. 2] Fig. 2 is a schematic cross-sectional view showing an embodiment of a moisture-curable resin sheet.

### Description of Embodiments

### <Moisture-curable resin sheet>

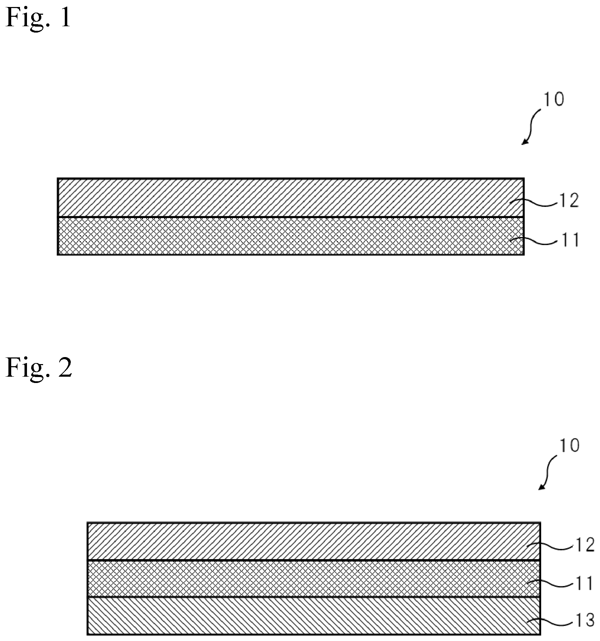

Hereinafter, the moisture-curable resin sheet of the present invention will be described by way of embodiments. As shown in Figs 1 and 2, a moisture-curable resin sheet 10 comprises a resin layer 11 and a transfer layer 12, and the transfer layer 12 is laminated on one surface of the resin layer 11. The moisture-curable resin sheet 10 may consist of a resin layer 11 and a transfer layer 12 as shown in Fig. 1, or may further include a release layer 13 as shown in Fig. 2. The release layer 13 may be laminated on the surface of the resin layer 11 opposite from the surface on which the transfer layer 12 is provided. Hereinafter, elements of the moisture-curable resin sheet each will be described in detail.

### [Resin layer]

The resin layer in the present invention comprises: (A) a (meth)acrylic resin having an isocyanate group. Since the resin layer contains the (meth)acrylic resin (A) having an isocyanate group, generation of bubbles can be suppressed during curing even in a state with a transfer layer laminated, so that surface roughening during curing can be prevented, and a cured layer with a good surface condition can be formed. Although the mechanism is unclear, it is presumed that the (meth)acrylic resin (A), which has an isocyanate group, suppresses generation of gas even when moisture-curing proceeds, or allows gas to be generated without forming bubbles, thereby preventing surface roughening during curing. It is presumed that generation of gas during curing is suppressed because water and carbon dioxide are adsorbed to a certain extent due to polarity of the ester group the (meth)acrylic resin has, and are gradually released after adsorption.

### ((Meth)acrylic resin (A))

The (meth)acrylic resin (A) is a moisture-curable resin having moisture curability due to having an isocyanate group. It is preferable that the (meth)acrylic resin (A) have an isocyanate group in a side chain. Also, the (meth)acrylic resin (A) has preferably two or more isocyanate groups in one molecule.

Although the (meth)acrylic resin (A) is not particularly limited as long as it has an isocyanate group, use of a (meth)acrylate having an isocyanate group as raw material is preferred. Therefore, it is preferable that the (meth)acrylic resin (A) be a polymer comprising a structural unit derived from a (meth)acrylate having an isocyanate group. When the (meth)acrylic resin (A) has a structural unit derived from a (meth)acrylate having an isocyanate group, the isocyanate group is disposed at a position close to the main chain, so that the molecular arrangement after curing is in a relatively regular manner, resulting in good curability. This easily enhances the hardness of the resin layer after curing with good surface conditions.

It is preferable that the (meth)acrylate-derived portion from the (meth)acrylate having an isocyanate group used as a starting material form the main chain of the resulting polymer, and that the isocyanate group from the (meth)acrylate be disposed in a side chain of the polymer. A plurality of isocyanate groups may be contained in side chain(s) in one molecule of the (meth)acrylic resin (A). The (meth)acrylic resin (A) may have an isocyanate group at a terminal, or may not have an isocyanate group at a terminal.

The term "(meth)acrylate" herein is used as a term meaning either or both of an acrylate and a methacrylate, and the same applies to other similar terms.

The (meth)acrylic resin (A) is a polymer obtained by polymerizing a monomer (a) comprising a (meth)acrylate, and has a structural unit derived from the (meth)acrylate in the main chain. It is preferable that the (meth)acrylic resin (A) be a polymer obtained by polymerizing a monomer (a) comprising a (meth)acrylate having an isocyanate group, and it is more preferable that the (meth)acrylic resin (A) be a polymer obtained by polymerizing a monomer (a) comprising a (meth)acrylate having an isocyanate group and an alkyl (meth)acrylate. Use of an alkyl (meth)acrylate imparts tackiness to the resin layer before curing. The monomer (a) may further contain monomers other than the (meth)acrylate having an isocyanate group and the alkyl (meth)acrylate (i.e., other monomers).

Examples of the (meth)acrylates having an isocyanate group include isocyanatoalkyl (meth)acrylates such as 2-isocyanatoethyl (meth)acrylate, 4-isocyanatobutyl (meth)acrylate, and 6-isocyanatohexyl (meth)acrylate, 2-(2-isocyanatoethoxy)ethyl (meth)acrylate and 1,1-Bis(acryloyloxymethyl)ethyl isocyanate, and in particular, isocyanatoalkyl (meth)acrylate is preferred. The number of carbon atoms in the alkyl group in the isocyanatoalkyl (meth)acrylate is, for example, about 1 to 10, preferably 2 to 4, though not particularly limited thereto.

Examples of the alkyl (meth)acrylates include alkyl (meth)acrylates having an alkyl group with about 1 to 18 carbon atoms, such as methyl (meth)acrylate, ethyl (meth)acrylate, propyl (meth)acrylate, isopropyl (meth)acrylate, n-butyl (meth)acrylate, isobutyl (meth)acrylate, tert-butyl (meth)acrylate, 2-ethylhexyl (meth)acrylate, n-octyl (meth)acrylate, isooctyl (meth)acrylate, n-nonyl (meth)acrylate, isononyl (meth)acrylate, n-decyl (meth)acrylate, isodecyl (meth)acrylate, lauryl (meth)acrylate, myristyl (meth)acrylate, isomyristyl (meth)acrylate, and stearyl (meth)acrylate. In view of imparting stickiness to the resin layer before curing, it is preferable that the alkyl (meth)acrylate have the alkyl group with 1 to 12 carbon atoms. Also, in view of enhancing stickiness before curing, it is more preferable that the alkyl (meth)acrylate contain an alkyl (meth)acrylate having the alkyl group with 3 to 10 carbon atoms.

Examples of other monomers, which are other than the (meth)acrylates having an isocyanate group and the alkyl (meth)acrylates, include alicyclic (meth)acrylates such as cyclohexyl (meth)acrylate and isobornyl (meth)acrylate; (meth)acrylates having an aromatic ring such as benzyl (meth)acrylate and phenoxy diethylene glycol (meth)acrylate; styrene-based monomers such as styrene, α-methylstyrene, α-ethylstyrene, p-methylstyrene, p-methoxystyrene, p-phenylstyrene, p-ethoxystyrene, p-chlorostyrene, m-chlorostyrene, and o-chlorostyrene; and vinyl monomers having a vinyl ester group such as vinyl acetate and vinyl propionate.

The amount of the (meth)acrylate having an isocyanate group used in the monomer (a) for constituting the (meth)acrylic resin (A) is preferably 2 mol% or more and 40 mol% or less, more preferably 5 mol% or more and 30 mol% or less, and still more preferably 8 mol% or more and 25 mol% or less.

With an amount of the (meth)acrylate having an isocyanate group used in the range, generation of bubbles during curing is easily suppressed even when the transfer layer laminated on the resin layer is cured. Also, a good balance among the stickiness before curing, the adhesive strength after curing, and the hardness after curing is easily achieved.

The amount of alkyl (meth)acrylate used in the monomer (a) is preferably 50 mol% or more and 98 mol% or less, more preferably 65 mol% or more and 95 mol% or less, and still more preferably 70 mol% or more and 92 mol% or less. With an amount of alkyl (meth)acrylate used equal to or more than the lower limit, flexibility is enhanced to enhance stickiness before curing. With an amount of alkyl (meth)acrylate used equal to or less than the upper limit, a certain amount or more of isocyanate groups are easily contained, so that the adhesive strength after curing and the hardness after curing tend to be enhanced.

In view of increasing flexibility to enhance stickiness before curing, it is particularly preferable that the alkyl (meth)acrylate in the monomer (a) contain an alkyl acrylate having the alkyl group with 3 to 10 carbon atoms, and the amount of the alkyl acrylate having the alkyl group with 3 to 10 carbon atoms used in the monomer (a) is preferably 30 mol% or more and 98 mol% or less, more preferably 35 mol% or more and 95 mol% or less, and still more preferably 40 mol% or more and 90 mol% or less.

The weight average molecular weight of the (meth)acrylic resin (A) is preferably 10,000 or more and 500,000 or less. With a weight average molecular weight of the (meth)acrylic resin (A) in the range, a good balance among the coatability, curability, stickiness, extensibility, etc. of the resin layer tends to be achieved. The weight average molecular weight of the (meth)acrylic resin (A) is more preferably 20000 or more and 300,000 or less, and still more preferably 40,000 or more and 100,000 or less. The weight average molecular weight herein is measured by gel permeation chromatography (GPC) and is determined in terms of standard polystyrene.

The isocyanate group content in the (meth)acrylic resin (A) is preferably 0.5 mass% or more and 15 mass% or less, more preferably 1 mass% or more and 10 mass% or less, and still more preferably 2 mass% or more and 8 mass% or less. With a content of 0.5 mass% or more, the crosslinking is achieved over a certain level to obtain a proper hardness, so that deterioration of the solvent resistance, etc. is prevented. Also, with a content of 15 mass% or less, the resin does not harden too much to be hard-to-break, and poor storage stability is also prevented.

The isocyanate group content referred to here is the proportion of the mass of NCO molecules (molecular weight: 42) in the total mass of the (meth)acrylic resin (A), and is determined, for example, by potentiometric titration in accordance with JIS K 1603-1. In other words, the NCO amount can be determined by mixing and reacting a sample and di-n-butylamine and subjecting the remaining di-n-butylamine to potentiometric titration with a hydrochloric acid standard solution.

The content of the (meth)acrylic resin (A) in the resin layer may be, for example, 20 mass% or more, and is preferably 30 mass% or more, more preferably 40 mass% or more, and still more preferably 50 mass% or more. With a content of the (meth)acrylic resin (A) at a certain level or more, the stickiness before curing, the hardness after curing of the resin layer, and the adhesion to the adherend are easily enhanced while obtaining good surface condition of the resin layer. The content of the (meth)acrylic resin (A) in the resin layer may be 100 mass% or less, and in view of containing a certain amount or more of other components such as compound (B), the content is preferably 90 mass% or less, more preferably 80 mass% or less, and still more preferably 75 mass% or less.

### (Compound (B))

It is preferable that the moisture-curable resin sheet further contain: (B) a compound having an isocyanate group (polyisocyanate compound). The moisture-curable resin sheet having the compound (B) can give a cured resin layer with increased hardness, so that the mechanical strength and scratch resistance of the resin layer after curing can be enhanced. The compound (B) preferably has two or more isocyanate groups. Also, the compound (B) is a compound other than the (meth)acrylic resin (A) and preferably contains no polyacrylic skeleton.

Examples of compound (B) include polyisocyanates such as aliphatic diisocyanate compounds including hexamethylene diisocyanate (HDI), trimethyl hexamethylene diisocyanate, lysine diisocyanate, norbornane diisocyanate, isophorone diisocyanate (IPDI), xylylene diisocyanate, hydrogenated xylylene diisocyanate (H6XDI), hydrogenated diphenylmethane diisocyanate, cyclohexane diisocyanate, bis(isocyanate methyl)cyclohexane, and dicyclohexylmethane diisocyanate; and aromatic diisocyanate compounds including 4,4-diphenylmethane diisocyanate, tolylene diisocyanate, and naphthalene-1,5-diisocyanate.

The compound (B) may be a modified product obtained by multimerizing the polyisocyanate, such as polymeric MDI, or may be a polyol modified product (adduct) of the polyisocyanate such as a trimethylolpropane adduct of a polyisocyanate, a biuret of the polyisocyanate, an allophanate of the polyisocyanate, an isocyanurate of the polyisocyanate, or a condensate thereof. Preferred specific examples include an HDI adduct, HDI biuret, HDI allophanate, HDI isocyanurate, H6XDI isocyanurate, IPDI isocyanurate, and IPDI adduct.

As the compound (B), it is preferable to select one which is flexible and has high stickiness in an uncured state. From such a viewpoint, an aliphatic polyisocyanate or a modified product thereof is preferred. Among them, an adduct, a biuret, an allophanate, or an isocyanurate of aliphatic polyisocyanate is more preferred, and an adduct, a biuret, an allophanate, or an isocyanurate of HDI or IPDI is still more preferable.

The compounds as the compound (B) may be used singly or in combination of two or more types.

The molecular weight of the compound (B) is preferably 1000 or less, though not particularly limited. The compound (B) having a lowered molecular weight can bring about enhanced stickiness of the resin layer before curing and enhanced adhesion to an adherend after curing. The molecular weight of the compound (B) is preferably 800 or less, more preferably 700 or less. The molecular weight of the compound (B) may be, for example, 160 or more, and is preferably 200 or more, more preferably 300 or more, and still more preferably 400 or more, though not particularly limited.

The molecular weight of the compound (B) is calculated from the structural formula. In the case where two or more types of compounds are used as the compound (B) in combination, the molecular weight means the weight average molecular weight.

In the case where the compound (B) is used, the content of compound (B) in the resin layer is preferably 5 parts by mass or more, more preferably 10 parts by mass or more, and still more preferably 20 parts by mass or more, per 100 parts by mass of (meth)acrylic resin (A) and compound (B) in total. With a content of compound (B) at a certain level or more, the hardness of the resin layer after curing is easily enhanced. Also, the content of compound (B) may be, for example, 80 parts by mass or less, and is preferably 60 parts by mass or less, more preferably 50 parts by mass or less, and still more preferably 40 parts by mass or less. With a content of compound (B) at a certain value or less, stickiness of the resin layer before curing and adhesion after curing are easily enhanced while having good surface conditions of the resin layer.

### (Moisture-curing catalyst)

The resin layer may contain an moisture-curing catalyst, which accelerates the moisture-curing reaction. With use of an moisture-curing catalyst, the resin layer has better moisture curability, and the hardness of the resin layer and the adhesive strength after curing are easily enhanced. Also, even when the ambient temperature is low such as in winter, the resin layer can be appropriately cured by leaving it in the air.

Specific examples of the moisture-curing catalyst include amine-based compounds and metal-based catalysts. Examples of the amine compounds include compounds having a morpholine skeleton such as di(methyl morpholino)diethyl ether, 4-morpholinopropyl morpholine, and 2,2'-dimorpholino diethyl ether, dimethyl amino group-containing amine compounds having two dimethyl amino groups such as bis(2-dimethylaminoethyl)ether and 1,2-bis(dimethyl amino)ethane, triethylamine, 1,4-diazabicyclo[2.2.2]octane, and 2,6,7-trimethyl-1,4-diazabicyclo[2.2.2]octane.

Examples of the metal-based catalyst include tin compounds such as di-n-butyltin dilaurate, di-n-butyltin diacetate, and tin octoate; zinc compounds such as zinc octoate and zinc naphthenate; and other metal compounds such as zirconium tetra acetyl acetonate, copper naphthenate, and cobalt naphthenate.

The content of the moisture-curing catalyst in the resin layer is preferably 0.001 parts by mass or more and 5 parts by mass or less, more preferably 0.01 parts by mass or more and 3.5 parts by mass or less, and still more preferably 0.02 parts by mass or more and 2 parts by mass or less, per 100 parts by mass of the (meth)acrylic resin (A) and the compound (B) in total.

### (Surface conditioner)

The resin layer may contain a surface conditioner. The surface conditioner adjusts the surface tension to enhance wettability. Examples of the surface conditioner include silicone acrylic copolymer-based ones, silicone-based ones, polyacrylate-based ones, and fluorine-based ones. With a surface conditioner contained in the resin layer, the wettability of the resin layer is enhanced, so that the peel strength to the adherend can be enhanced. Also, the smoothness and slipperiness of the surface are adjusted with a surface conditioner, so that scratch resistance can be enhanced.

The content of the surface conditioner in the resin layer is preferably 0.01 parts by mass or more and 3 parts by mass or less, more preferably 0.05 parts by mass or more and 2 parts by mass or less, and still more preferably 0.1 parts by mass or more and 1 part by mass or less, per 100 parts by mass of the (meth)acrylic resin (A) and the compound (B) in total.

### (Colorant)

The resin layer may be used, for example, for protection or finishing of an adherend. Therefore, the resin layer may contain a colorant to form a colored layer. The colorant may be a pigment, a dye, or a brightener. Among these, a pigment is preferred.

Examples of the pigments used for the colorant include metal oxide pigments such as titanium oxide and iron oxide; inorganic-based pigments such as carbon black, clay, kaolin, barium sulfate, barium carbonate, calcium carbonate, talc, silica, and alumina white; and organic-based pigments such as azo-based pigments, quinacridone-based pigments, diketo pyrrolo pyrrole-based pigments, perylene-based pigments, perinone-based pigments, benzimidazolone-based pigments, vat-based pigments, isoindoline-based pigments, isoindolinone-based pigments, metal chelate azo-based pigments, phthalocyanine-based pigments, indanthrone-based pigments, dioxane-based pigments, and indigo-based pigments, though not particularly limited thereto.

As the dyes, known dyes may be used, and examples thereof include azo-based dyes, anthraquinone-based dyes, indigoid-based dyes, and stilbene-based dyes.

The brightener is a compound capable of imparting luster to the resin layer and imparting gloss when recognized from multi-directions. Examples of the brightener include compounds with a titanium oxide layer provided on the surface of natural mica, synthetic mica, alumina flakes, glass flakes or the like, though not particularly limited thereto.

The content of the colorant in the resin layer is preferably about 0.05 mass% or more and 15 mass% or less, preferably 0.1 mass% or more and 12 mass% or less, and more preferably 0.3 mass% or more and 8 mass% or less, though not particularly limited thereto.

The resin layer may also be a clear layer that contains substantially no colorant. The clear layer is a transparent layer and may have transparency that makes the color of the colored layer visible from the outside through the clear layer, and for example, the transmittance of light with a wavelength of 450 nm is preferably 80% or more. The clear layer is preferably a resin layer that contains no colorant, or may contain a small amount of colorant as long as it does not impair the function. The content of colorant in the clear layer is, for example, 0 to 2 mass%, preferably 0 to 0.5 mass%, and more preferably 0 to 0.1 mass%, though not particularly limited thereto.

The resin layer may also be used to deliver functions other than protection or finishing of the adherend, and may be used, for example, as heat-shielding coating. In this case, the coating formed of the resin layer may function as heat-shielding coating, and the resin layer may contain a heat-shielding agent to serve as heat-shielding layer. Further, the resin layer may have surface irregularities to have surface properties such as matte or embossed finishes. Other functions such as rust prevention, mildew prevention, heat insulation, and antistatic properties can also be achieved by blending a component suitable for the purpose (for example, a rust inhibitor, a mildew inhibitor, or an antistatic agent) into the resin layer.

The resin layer may contain components other than those described above, and may contain, for example, additives other than those described above. Examples of the additives include plasticizers, inorganic fillers other than colorants and heat shielding agents, dispersants, anti-aging agents, antioxidants, and ultraviolet absorbing agents. The resin layer may also contain resin components other than the components (A) and (B) as long as the effects of the present invention are not impaired.

Although the resin layer may be a single layer or may have a multi-layer structure having two or more layers, a single layer structure is preferred. A resin layer having a single layer structure can be manufactured easily. A multi-layer structure can impart various functions to a coating formed of the resin layer. In the case where the resin layer has a multi-layer structure, the entire resin layer may contain each of the components in the respective amounts described above, and it is preferable that each layer be the resin layer described above. In the case of a multi-layer structure, the compositions of the layers may be the same or different from each other, and are usually different from each other.

In the case of a multi-layer structure, the resin layer may include at least one of a colored layer containing a colorant or a clear layer containing substantially no colorant, and preferably includes a colored layer and a clear layer. In the case where a colored layer and a clear layer are included, the clear layer and the colored layer are arranged preferably in this order from the transfer layer side. In the case where a moisture-curable resin sheet with such a layer structure is bonded to an adherend, the colored layer and the clear layer will be arranged in this order from the adherend side.

As described above, when the resin layer includes a colored layer, the adherend can be colored by the coating formed of the resin layer. Further, when the resin layer further includes a clear layer, the colored layer can be protected or have gloss.

The colored layer in the multi-layer structure may have a colorant content in the range described above, and the clear layer may also have a colorant content in the range described above.

Of course, the resin layer having a multi-layer structure is not particularly limited to a two-layer structure including a clear layer and a colored layer, and may have various laminated structures. The structure may have a three-layer or more-layer structure including two or more colored layers and one or more clear layers, or it may have two colored layers with a clear layer omitted. It may also include two or more clear layers. It may also have a three-layer or more-layer structure including a heat-shielding layer or another layer provided between the clear layer and the colored layer.

The thickness of the resin layer is, for example, about 5 µm or more and 1000 µm or less, preferably 15 µm or more and 500 µm or less, and more preferably 20 µm or more and 200 µm or less. In the case where the resin layer has a multi-layer structure, the thickness of the resin layer refers to the total thickness thereof.

In the case where a colored layer and a clear layer are included in the resin layer, the thickness of the colored layer is, for example, 5 µm or more and 500 µm or less, preferably 10 µm or more and 100 µm or less, and more preferably 15 µm or more and 50 µm or less, though not particularly limited. The thickness of the clear layer is, for example, 5 µm or more and 500 µm or less, preferably 10 µm or more and 100 µm or less, and more preferably 15 µm or more and 50 µm or less, though not particularly limited.

### (Transfer layer)

The transfer layer is a member that protects the resin layer from scratches and adhesion of foreign matters, and also serves as a support when the resin layer is bonded to an adherend. The transfer layer may be formed of a resin film. The resin used for the resin film is preferably a thermoplastic resin, or may be a resin other than a thermoplastic resin. Specific examples of the resin used for the resin film include polyolefin resins such as cyclic polyolefin resins, polyethylene resins, and polypropylene resins, ethylene vinyl acetate copolymer resins, polyester resins such as polybutylene terephthalate and polybutylene terephthalate, polyamide resins, acrylonitrile butadiene styrene resins, polycarbonate resins, acrylic resins, fluororesins, vinyl chloride resins, polymethyl pentene resins, and tetrafluoroethylene resins.

The resin film constituting the transfer layer may be a single layer film consisting of a single layer, or may be a multilayer film including two or more layers. In the resin film constituting the transfer layer, the resins for the resin film may be used singly or in combination of two or more types. In the case of using two or more types of resins in combination, different types of resins may be used in the respective layers to form a multilayer film. Alternatively, a single layer film may be formed from a mixture of two or more types of resins, or one or more layers in a multilayer film may be formed from the mixture.

The resin film used for the transfer layer may be a stretched resin film, or may be a non-stretched resin film.

The transfer layer may have at least one surface that has been subjected to release-treatment with a release agent such as a silicone-based release agent or a fluorine-containing release agent. In the case where the transfer layer has been subjected to the release-treatment, it is preferable that the release-treated surface constitute the surface on the resin layer side. The release-treated transfer layer tends to have good releasability from the resin layer. However, the transfer layer may not be release-treated as long as it can be peeled from the resin layer.

The thickness of the transfer layer is, for example, 10 µm or more and 1000 µm or less, preferably 30 µm or more and 700 µm or less, and more preferably 50 µm or more and 500 µm or less, though not particularly limited. With a thickness of the transfer layer in the range, a certain degree of strength and flexibility can be imparted to the transfer layer.

### (Release layer)

The release layer is a member that protects the resin layer from scratches and adhesion of foreign matters. The release layer is preferably formed of a resin film. The resin used for the resin film as the release layer is preferably a thermoplastic resin, or may be a resin other than a thermoplastic resin. Specific examples of the resin used for the resin film as the release layer are the same as those listed as resins used for the transfer layer. The resin used for the release layer and the resin used for the transfer layer may be the same or different from each other.

The resin film constituting the release layer may be a single layer film consisting of a single layer, or may be a multilayer film including two or more layers. In the resin film constituting the release layer, the resins for the resin film may be used singly or in combination of two or more types. In the case where two or more types of resins are used in combination, different types of resins may be used in the respective layers to form a multilayer film. Alternatively, a single layer film may be formed from a mixture of two or more types of resins, or one or more layers in a multilayer film may be formed from the mixture.

The resin film used for the release layer may be a stretched resin film, or may be a non-stretched resin film.

The release layer may have at least one surface hat has been subjected to release-treatment with a release agent such as a silicone-based release agent or afluorine-containing release agent. In the case where the release layer has been subjected to the release-treatment, it is preferable that the release-treated surface constitute the surface on the resin layer side. The release-treated release layer tends to have good releasability from the resin layer. However, the release layer may not be release-treated as long as it can be peeled from the resin layer.

The thickness of the release layer is, for example, 10 µm or more and 1000 µm or less, preferably 30 µm or more and 700 µm or less, and more preferably 50 µm or more and 500 µm or less, though not particularly limited.

### (Method for manufacturing moisture-curable resin sheet)

A method for manufacturing the moisture-curable resin sheet is not particularly limited, and the moisture-curable resin sheet may be manufactured by a known method. For example, a moisture-curable resin composition is provided and may be applied onto a transfer layer, and dried on an as needed basis to form a resin layer. The moisture-curable resin composition contains (meth)acrylic resin (A), and may also contain compound (B), a surface conditioner, an moisture-curing catalyst, a colorant, or other components. The details and contents of the respective components in the moisture-curable resin composition are as described above for the resin layer. The content based on the resin layer in that case may be replaced with the content based on the solid content excluding the volatile content of the moisture-curable resin composition instead of the resin layer.

In the case where the moisture-curable resin sheet has a release layer, the moisture-curable resin composition may be applied to the release layer and dried on an as-needed basis to form a resin layer, and a transfer layer may be further bonded to the resin layer formed on the resulting release layer to obtain a moisture-curable resin sheet. When the curable resin composition is applied to the transfer layer or release layer, the curable resin composition may be appropriately diluted with a solvent or the like. Examples of the solvent include ethyl acetate, butyl acetate, and toluene. The solvent may be, for example, the solvent used in manufacturing (meth)acrylic resin (A).

In the case where the resin layer is multi-layered, each layer may be formed in sequence to be laminated. For example, in the case where the resin layer has a clear layer and a colored layer, the clear layer and the colored layer may be laminated in this order on the transfer layer. In the case where the moisture-curable resin sheet has a release layer, one or more resin layers formed on the release layer and one or more resin layers formed on the transfer layer may be bonded to each other to obtain a moisture-curable resin sheet. In the case of a multi-layered structure, as described above, each layer is preferably made of a moisture-curable resin composition containing the components described above in the respective contents described above. The compositions of the layers may be the same or different from each other, and usually different from each other.

The resin layer is formed preferably in a low-humidity environment to prevent curing from proceeding due to moisture absorption.

### [Coating method]

The moisture-curable resin sheet of the present invention is preferably used as a coating sheet. Preferably, the moisture-curable resin sheet is bonded to an adherend, followed by curing the resin layer to form a coating composed of the cured resin layer on the surface of the adherend.

Hereinafter, an embodiment of the coating method for forming a coating on an adherend using the moisture-curable resin sheet of the present invention will be described in detail. The coating method according to an embodiment of the present invention includes the following first and second processes.

First process: the process of bonding a moisture-curable resin sheet to an adherend.

Second process: the process of curing the moisture-curable resin sheet.

### (First process)

The first process is the process of bonding a moisture-curable resin sheet to an adherend.

Before bonded to the adherend, the moisture-curable resin sheet may include a release layer laminated on the surface of the resin layer opposite from the surface on which a transfer layer is provided. In the case where the release layer is laminated, the release layer may be peeled off from the resin layer to expose the resin layer before the moisture-curable resin sheet is bonded to the adherend. The method of peeling the release layer is not particularly limited, and the release layer may be peeled off with a peeling device or by hand. Of course, the release layer may be omitted in the moisture-curable resin sheet.

In this process, the moisture-curable resin sheet with the resin layer exposed may be bonded to the adherend such that the resin layer is in contact with the adherend. In this case, the moisture-curable resin sheet may be bonded to the adherend by hand or with a laminating device, though not particularly limited. Since the resin layer is formed of a moisture-curable resin composition and is not yet cured when bonded, a certain degree of flexibility is easily secured. Therefore, the resin layer adheres appropriately to the adherend to be temporarily fixed to the adherend with an appropriate stickiness.

First the moisture-curable resin sheet may also be bonded by the so-called wet application method. Wet application may be performed by applying water to an adherend, bonding the moisture-curable resin sheet to the surface with the water applied, and then squeezing out the water between the moisture-curable resin sheet and the adherend using a squeegee or the like. Thereby, bubbles and air present between the moisture-curable resin sheet and the adherend are squeezed out together with water, so that the moisture-curable resin sheet can be neatly bonded to the adherend. The water applied to the adherend may be water alone, or additives such as surfactants or organic solvents may be appropriately added to water.

The moisture-curable resin sheet may be subjected to pre-molding such as vacuum molding, press molding, or compressed-air molding, to impart a shape corresponding to the shape of the adherend, and the shaped moisture-curable resin sheet may be bonded to the adherend. In the case where the moisture-curable resin sheet has a release layer, pre-molding may be performed before the release layer is peeled off from the resin layer, or after the release layer is peeled off from the resin layer. Pre-molding allows the moisture-curable resin sheet to be bonded in close contact with the adherend easily, even in the case where the adherend has a complex shape. Among the above, pre-molding is preferably performed by vacuum molding. Pre-molding may be performed by compressing a coating sheet against a jig or a mold by vacuum molding to stretch the moisture-curable resin sheet with the jig or the mold such that the moisture-curable resin sheet has a shape corresponding to the surface shape of the adherend.

Here, the vacuum molding is preferably TOM molding. TOM stands for "Three-dimension Overlay Method", and TOM molding allows for imparting a complex shape.

### (Second process)

The second process is a process performed after the first process, and is the process of curing the resin layer of the moisture-curable resin sheet. In this process, the resin layer may be cured to such an extent that the resin layer is usable as a coating. The curing of the resin layer is not particularly limited as long as it is cured by moisture. Usually, the resin layer may be left in the atmosphere or a humid environment (for example, in an environment at 50% RH or more) at room temperature or a temperature close to it (for example, 0 to 45°C, preferably 5 to 30°C). The time for leaving it in the atmosphere or a humid environment is not particularly limited and is, for example, about 1 hour or more and 2 weeks or less, and preferably about 1 day or more and 1 week or less.

Since the moisture-curable resin sheet of the present invention is cured simply by being left in the atmosphere, the resin layer can be industrially cured without introducing large-scale equipment. Also, even in the case where the adherend is large and difficult to be heated, or in the case where the adherend has low heat resistance, the resin layer can be appropriately cured.

The coating method of the present invention may further include the process of peeling off the transfer layer from the resin layer. The transfer layer may be peeled off with a peeling device or by hand. The transfer layer may be peeled off before the second process described above, after the second process, or during the second process. However, it is preferable to peel off the transfer layer after progress of curing of the resin layer to a certain extent. It is therefore preferable to peel off the transfer layer after leaving it in the atmosphere for a certain period of time or more (for example, one hour or more, preferably one day or more). The progress of curing of the resin layer to a certain extent prevents exposure of the uncured resin layer or the resin layer on the early stage of curing to the outside, so that the resin layer before curing can be prevented from adhesion of dust or being scratched. Also, peeling off the transfer layer from the resin layer cured to a certain extent prevents the resin layer from being scratched during peeling.

The moisture-curable resin sheet may be bonded to various adherends to form a coating. Examples of the adherends to which the moisture-curable resin sheet is bonded include vehicle components typified by vehicle interior members such as automobile interior members and interior members for transport equipment other than automobiles, vehicle exterior members such as automobile exterior members and exterior members for transport equipment other than automobiles, exterior members for heavy machinery, ships, aircraft, etc., exterior walls or roof members for houses and buildings, bridges, steel frames, plants, wind power generation blades, electrical appliances, and miscellaneous goods, though not particularly limited.

Among these, the moisture-curable resin sheet is preferably used for vehicles and vehicle components, and in particular, vehicle exterior members such as exterior members for transport equipment other than automobiles are preferred as adherends. The vehicle exterior member is preferably the exterior of a vehicle body, or may be a hood, roof, door panel, bumper, fuel filler panel, trunk lid, rear gate, etc. In the case where the moisture-curable resin sheet is bonded to a vehicle exterior member, it may be bonded to the exterior member already fixed to a vehicle body, or to the exterior member before being fixed to a vehicle body.

The material of the adherend may be any of resin materials, inorganic materials such as ceramics, and metal materials such as steel, though not particularly limited. Among these, metal materials such as steel are preferred.

Alternatively, a primer layer or the like may be appropriately formed on the surface of an adherend to which the moisture-curable resin sheet is to be bonded.

The present invention also provides a method for manufacturing a vehicle and a method for manufacturing a vehicle component. The method for manufacturing a vehicle or a vehicle component of the present invention includes the process of coating with the moisture-curable resin sheet of the present invention. In the coating process, a vehicle or a vehicle component may be coated by the method described for the coating method.

### Examples

The present invention will be described in more detail by way of Examples below, buy the present invention is not particularly limited by these Examples.

The measurement method and evaluation method in the present Examples are as follows.

### (1) Evaluation of stickiness before curing

A moisture-curable resin sheet was cut into a width of 1 inch (2.54 cm), and the PET film as the release layer was peeled off. The sheet was then bonded to a coated plate (SPCC-SD urethane-coated test piece, manufactured by Standard Testpiece Co., Ltd.) with a squeegee. The adhesive strength (N/inch) of the bonded film was measured by a 180° peel test under conditions at 25°C and a tensile speed of 30 mm/sec.

### (2) Generation of bubble

The moisture-curable resin sheet film was cut into a 5-cm square, and the PET film as the release layer was peeled off. The sheet was then bonded to the same coated plate as in (1) by wet application. The test piece after bonding was left in an environment at 25°C and 70% RH for 5 days with the PET film as the transfer layer bonded, so that the resin layer was moisture-cured. After moisture-curing, occurrence of floating of the PET film resulting from generation of gas was visually checked. A test piece with bubbles generated or peeling on the entire surface of the transfer layer resulting from occurrence of gas was rated as "C", a test piece with bubbles generated in a part was rated as "B", and one without occurrence of peeling or bubbles was rated as "A".

### (3) Pencil hardness

In the same manner as in (2) described above, the resin layer was bonded to a steel plate and moisture-cured. The PET film as the transfer layer was then peeled off, and the pencil hardness of the exposed surface of the resin layer was measured in accordance with JIS K 5600-5-4.

### (4) Cross-cut test evaluation

In the same manner as in (2) described above, the resin layer was bonded to a steel plate and moisture-cured. The PET film as the transfer layer was then peeled off. The resin layer was subjected to a cross-cut test in accordance with JIS K 5600-5-6 and evaluated according to the following criteria.

### <Evaluation criteria>

A: Test result is Grade 0 to 2.
B: Test result is Grade 3 or more.

### (Manufacturing Example 1)

In a 1-L glass reaction vessel equipped with a stirrer, a thermometer, and a cooler, 20 g of methyl methacrylate (hereinafter referred to as "MMA"), 77 g of butyl acrylate (hereinafter referred to as "BA"), 31 g of 2-isocyanatoethyl methacrylate (trade name "Karenz MOI" manufactured by Resonac Corporation, hereinafter referred to as "MOI"), 2.0 g of 2,2'-azobis-2,4-dimethylvaleronitrile (manufactured by FUJIFILM Wako Pure Chemical Corporation, trade name "V-65", hereinafter referred to as "V-65"), and 200 g of ethyl acetate (hereinafter referred to as "EA") were fed and uniformly dissolved at room temperature. While stirring the contents in the flask, the internal temperature was raised to 60°C under nitrogen atmosphere, and solution polymerization was performed for 6 hours to obtain a solution of an acrylic resin (A-1) having an isocyanate group in the side chain (solid content: 40 mass%). The resulting acrylic resin (A-1) had a weight average molecular weight of 80,000. The monomers constituting the acrylic resin (A-1) included 20 mol% of MMA, 60 mol% of BA, and 20 mol% of MOI. The resulting acrylic resin (A-1) had an isocyanate group content (NCO content) of 7.0 mass%.

### (Manufacturing Example 2)

In a 1-L glass reaction vessel equipped with a stirrer, a thermometer, and a cooler, 44 g of MMA, 56 g of BA, 18.5 g of MOI, 2.0 g of V-65, and 200 g of EA were fed and uniformly dissolved at room temperature. While stirring the contents in the flask, the internal temperature was raised to 60°C under nitrogen atmosphere, and solution polymerization was performed for 6 hours to obtain a solution of an acrylic resin (A-2) having an isocyanate group in the side chain (solid content: 38 mass%). The resulting polymer had a weight average molecular weight of 70,000. The monomers constituting the acrylic resin (A-2) included 44 mol% of MMA, 44 mol% of BA, and 12 mol% of MOI. The resulting acrylic resin (A-2) had an isocyanate group content of 4.6 mass%.

### (Manufacturing Example 3)

A solution of acrylic resin (A-3) (solid content: 38 mass%) was obtained in the same manner as in Manufacturing Example 2, except that the amount of initiator V-65 was changed to 3.0 g. The resulting polymer had a weight average molecular weight of 30,000. The monomers constituting the acrylic resin (A-3) included 44 mol% of MMA, 44 mol% of BA, and 12 mol% of MOI. The acrylic resin (A-3) had an isocyanate group content of 4.6 mass%.

### (Manufacturing Example 4)

A solution of acrylic resin (A-4) (solid content: 38 mass%) was obtained in the same manner as in Manufacturing Example 2, except that the amount of initiator V-65 was changed to 0.5 g. The resulting polymer had a weight average molecular weight of 250,000. The monomers constituting the acrylic resin (A-4) included 44 mol% of MMA, 44 mol% of BA, and 12 mol% of MOI. The acrylic resin (A-4) had an isocyanate group content of 4.6 mass%.

### (Manufacturing Example 5)

A solution of acrylic resin (A-5) (solid content: 38 mass%) was obtained in the same manner as in Manufacturing Example 2, except that the amounts of methyl methacrylate (hereinafter referred to as "MMA"), butyl acrylate (hereinafter referred to as "BA"), and 2-isocyanatoethyl methacrylate (trade name "Karenz MOI" (manufactured by Resonac Corporation, hereinafter referred to as "MOI") were changed to 10 g, 64 g, and 64 g, respectively. The resulting polymer had a weight average molecular weight of 50,000. The monomers constituting the acrylic resin (A-5) included 10 mol% of MMA, 50 mol% of BA, and 40 mol% of MOI. The acrylic resin (A-5) had an isocyanate group content of 11.9 mass%.

### (Manufacturing Example 6)

A solution of acrylic resin (A-6) (solid content: 38 mass%) was obtained in the same manner as in Manufacturing Example 2, except that the amounts of methyl methacrylate (hereinafter referred to as "MMA"), butyl acrylate (hereinafter referred to as "BA"), and 2-isocyanatoethyl methacrylate (trade name "Karenz MOI" (manufactured by Resonac Corporation, hereinafter referred to as "MOI") were changed to 37 g, 77 g, and 4.7 g, respectively. The resulting polymer had a weight average molecular weight of 80,000. The monomers constituting the acrylic resin (A-6) included 37 mol% of MMA, 60 mol% of BA, and 3 mol% of MOI. The acrylic resin (A-6) had an isocyanate group content of 0.9 mass%.

In the resin layer, the components used other than the (meth)acrylic resin were as follows:
Urethane prepolymer: trade name "Takenate M-605N", manufactured by Mitsui Chemicals, Inc.
Polyisocyanate (1): trade name "Desmodur N3200A", manufactured by Covestro AG, HDI biuret, molecular weight: 479
Polyisocyanate (2): trade name "Takenate D-140N", manufactured by Mitsui Chemicals, Inc., isophorone diisocyanate adduct, molecular weight: 801
Surface conditioner: trade name "BYK-378", manufactured by BYK-Chemie
Catalyst: moisture-curing catalyst, 2,2'-dimorpholinodiethyl ether (manufactured by Tokyo Chemical Industry Co., Ltd., reagent)
Pigment: "NSP-UP 841B" manufactured by Nikko Bics Co., Ltd., active pigment concentration = 9 mass%, solid content concentration (NV) = 24 mass%

### (Example 1)

To the solution of (meth)acrylic resin (A-1) obtained in Manufacturing Example 1 (100 parts by mass of (meth)acrylic resin (A-1), based on the solid content), 0.2 parts by mass of a surface conditioner was added to prepare a solution of moisture-curable resin composition. The resulting solution of moisture-curable resin composition was applied to a release-treated PET film having a thickness of 50 µm (manufactured by Nakamoto Packs Co., Ltd., trade name "NS-50B") as a release layer with a doctor knife in a dry bench (dew point - 50°C), such that the thickness of the coating film after drying was 50 µm. The solvent was then dried by heating on a hot plate at 100°C for 5 minutes to form a resin layer. A release-treated PET film (manufactured by Nakamoto Packs Co., Ltd., trade name: "NS-50C") as a transfer layer was laminated on the resulting resin layer, which was then stored in a moistureproof bag.

### (Examples 2 to 9, and Comparative Example 1)

The same procedure as in Example 1 was performed, except that the components were blended as shown in Table 1 to prepare a moisture-curable resin composition.

**[Table 1]**

| Item | | | Example | | | | | | | | | Comparative Example |
|---|---|---|---|---|---|---|---|---|---|---|---|---|
| | | | 1 | 2 | 3 | 4 | 5 | 6 | 7 | 8 | 9 | 1 |
| Composition (part by mass) | (Meth)acrylic resin (A-1) (molecular weight: 80,000, NCO content: 7.0%) | | 100 | | | | | | | | | |
| | (Meth)acrylic resin (A-2) (molecular weight: 70,000, NCO content: 4.6%) | | | 70 | 70 | 70 | 20 | | | | | |
| | (Meth)acrylic resin (A-3) (molecular weight: 30,000, NCO content: 4.6%) | | | | | | | 70 | | | | |
| | (Meth)acrylic resin (A-4) (molecular weight: 250,000, NCO content: 4.6%) | | | | | | | | 70 | | | |
| | (Meth)acrylic resin (A-5) (molecular weight: 50,000, NCO content: 11.9%) | | | | | | | | | 70 | | |
| | (Meth)acrylic resin (A-6) (molecular weight: 80,000, NCO content: 0.9%) | | | | | | | | | | 70 | |
| | Urethane prepolymer | | | | | | | | | | | 70 |
| | Polyisocyanate (molecular weight: 479) | | | 30 | 30 | | | 30 | 30 | 30 | 30 | 30 |
| | Polyisocyanate (molecular weight: 801) | | | | | 30 | 80 | | | | | |
| | Surface conditioner | | 0.5 | 0.5 | 0.5 | 0.5 | 0.5 | 0.5 | 0.5 | 0.5 | 0.5 | 0.5 |
| | Catalyst | | | | 0.2 | | | | | | | |
| | Pigment | | | | | | | 3 | 3 | 3 | 3 | |
| (Meth)acrylic resin content in resin layer (mass%) | | | 100% | 70% | 70% | 70% | 20% | 68% | 68% | 68% | 68% | 0% |
| Evaluation | | Stickiness before curing (N/inch) | 0.7 | 1.2 | 1 | 0.1 | 0.1 | 2.1 | 1.0 | 0.5 | 1.5 | 0.8 |
| | | Generation of bubble | A | A | A | A | B | A | A | A | A | C |
| | | Pencil hardness | B | HB | H | HB | 2H | HB | HB | 2H | B | B |
| | | Crosscut test | A | A | A | A | B | A | A | A | A | A |

| | | | | | | | | | | | | |
|---|---|---|---|---|---|---|---|---|---|---|---|---|
| *The content of each component in Table 1 is based on the solid content. *The amount of the active ingredient in the pigment is the value in Table 1 multiplied by 9/24. | | | | | | | | | | | | |

In Examples 1 to 9, in which a (meth)acrylic resin having an isocyanate group was used as a moisture-curable resin, generation of bubbles was suppressed when moisture-cured even with a transfer layer laminated, and a coating with a good surface condition was thus formed.

In contrast, in Comparative Example 1, in which a urethane resin was used as a moisture-curable resin, generation of bubbles was not suppressed when moisture-cured with a transfer layer laminated, and accordingly, a coating with a good surface condition was not obtained.

## Claims

1. A moisture-curable resin sheet comprising:
a transfer layer; and
a resin layer comprising: (A) a (meth)acrylic resin having an isocyanate group.

2. The moisture-curable resin sheet according to claim 1, wherein the (meth)acrylic resin (A) has a weight average molecular weight of 10,000 or more and 500,000 or less.

3. The moisture-curable resin sheet according to claim 1 or 2, further comprising: (B) a compound having two or more isocyanate groups other than the (meth)acrylic resin (A).

4. The moisture-curable resin sheet according to claim 3, wherein the compound (B) has a molecular weight of 1000 or less.

5. The moisture-curable resin sheet according to any one of claims 1 to 4, wherein the resin layer has a content of the (meth)acrylic resin (A) of 30 mass% or more.

6. The moisture-curable resin sheet according to any one of claims 1 to 5, wherein the (meth)acrylic resin (A) has an isocyanate group in a side chain.

7. The moisture-curable resin sheet according to any one of claims 1 to 6, wherein the (meth)acrylic resin (A) has an isocyanate group content of 0.5 mass% or more and 15 mass% or less.

8. The moisture-curable resin sheet according to any one of claims 1 to 7, wherein the resin layer comprises a pigment.

9. A vehicle component comprising a coating formed from the moisture-curable resin sheet according to any one of claims 1 to 8.

10. A vehicle comprising a coating formed from the moisture-curable resin sheet according to any one of claims 1 to 8.

11. A method for manufacturing a vehicle, comprising a process of coating with the moisture-curable resin sheet according to any one of claims 1 to 8.

12. A method for manufacturing a vehicle component, comprising a process of coating with the moisture-curable resin sheet according to any one of claims 1 to 8.
